# EUROPEAN PATENT APPLICATION

(11) **EP 4 491 643 A1**
(43) Date of publication of application: **15.01.2025**
(21) Application number: 23766401.6
(22) Date of filing: 09.02.2023
(51) Int. Cl.: C08F 210/00, C08F 232/00, G02B 1/04

(54) **CYCLIC OLEFIN COPOLYMER, CYCLIC OLEFIN COPOLYMER COMPOSITION, MOLDED BODY AND OPTICAL COMPONENT**

(30) Priority: 11.03.2022 JP 2022037968
(71) Applicant: Mitsui Chemicals, Inc., Tokyo 104-0028 (JP)
(72) Inventor: LEE Jooyeon, Sodegaura-shi, Chiba 299-0265 (JP); OGAWA Ryohei, Sodegaura-shi, Chiba 299-0265 (JP); NAKASHIMA Makoto, Sodegaura-shi, Chiba 299-0265 (JP)
(74) Representative: Hoffmann Eitle
(86) International application number: PCT/JP2023/004311
(87) International publication number: WO 2023/171221

(57) **Abstract**

A cyclic olefin copolymer includes a constituent unit (A) that is derived from an olefin monomer represented by Formula (1), and a constituent unit (B) that is derived from at least one cyclic olefin monomer selected from the group consisting of a cyclic olefin monomer represented by Formula (2) and a cyclic olefin monomer represented by Formula (3), in which, when a total content of the constituent unit (A) and the constituent unit (B) in the cyclic olefin copolymer is set to 100% by mole, a content of the constituent unit (A) is 40% by mole or more and 70% by mole or less and a content of the constituent unit (B) is 30% by mole or more and 60% by mole or less, a weight average molecular weight (Mw) measured by gel permeation chromatography (GPC) is 50,000 or more and 500,000 or less, and a glass transition temperature (Tg) is 150°C or higher.

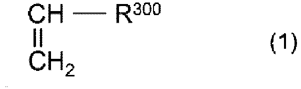

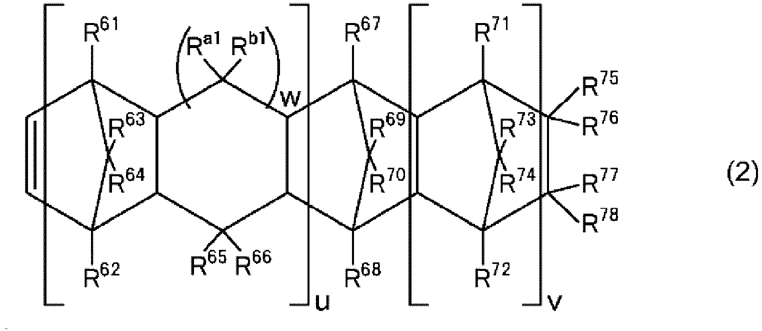

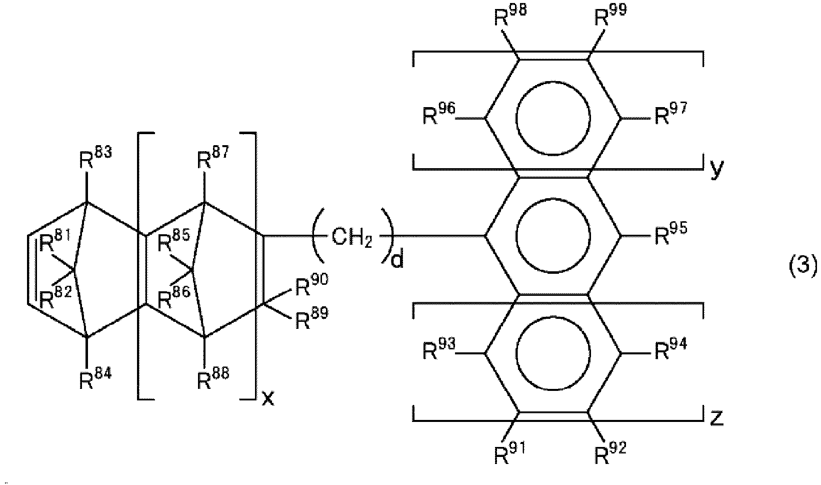

## Description

### TECHNICAL FIELD

The present invention relates to a cyclic olefin copolymer, a cyclic olefin copolymer composition, a molded body, and an optical component.

### BACKGROUND ART

Glass is widely used as a material for optical components due to having characteristics such as a high transparency and refractive index and extremely low birefringence.

However, glass has disadvantages of having poor moldability and not easily being reduced in weight and thus polymer materials that are lightweight and have excellent moldability have recently come to be used as materials for optical components. Examples of such polymer materials include polymethyl methacrylate (PMMA), polycarbonate (PC), and the like.

On the other hand, PMMA is preferable in terms of having good transparency and low birefringence, but has disadvantages such as low heat resistance, being easily deformed by warping or the like after molding, and poor shape stability.

In addition, PC has a better refractive index and heat resistance than PMMA, but has disadvantages such as high birefringence. When the birefringence of an optical component is high, a large amount of aberration will occur, which causes abnormalities in the condensed spot shape and reduces pickup performance.

Here, cyclic olefin copolymers are attracting attention as materials having low birefringence and are being used in optical lenses such as imaging lenses, fθ lenses, and pickup lenses. In particular, for cyclic olefin copolymers used in optical lenses for head-mounted displays or the like, there is a demand to further reduce the influence of birefringence because light passes through the same lens a plurality of times due to the design.

As techniques related to such cyclic olefin copolymers, there are, for example, the inventions disclosed in Patent Documents 1 to 3.

Patent Document 1 discloses a method for manufacturing an optical component, the method including a step of molding a molded body for an optical component formed of a resin (A) in a mold, a first heat treatment step of heat treating the molded body for an optical component taken out of the mold, a gradual cooling step of gradually cooling the molded body for an optical component after the first heat treatment step, and a second heat treatment step of further heat treating the molded body for an optical component after the gradual cooling step, in which, when the glass transition temperature of the resin (A) is Tg[°C], the heating temperature in the first heat treatment step is T₁[°C], and the heating temperature in the second heat treatment step is T₂[°C], the relationships of Tg-15≤T₁≤Tg-2 and T₂≤Tg-20 are satisfied, the method being capable of obtaining a low birefringence optical component.

Patent Document 2 discloses a retardation film formed of an amorphous polyolefin copolymer (a) formed of ethylene units and norbornene units, (b) in which the norbornene units include a bivalent site, the stereoregularity of the bivalent site being meso type or racemo type, the ratio of meso type bivalent site/racemo type bivalent site being 4 or higher, and (c) having a glass transition temperature in a range of 100°C to 180°C, the retardation film having high moisture resistance and good dimensional stability and being able to be assembled in, for example, a liquid crystal display apparatus and effectively used to improve the liquid crystal display quality for the visual field angle, contrast, color compensation, and the like.

Patent Document 3 discloses a retardation film formed by stretching a cyclic olefin copolymer including a repeating unit derived from ethylene and a norbornene repeating unit, having a molecular weight distribution Mw/Mn in a range of 3.0 to 1.0, and having a glass transition temperature in a range of 110°C to 175°C, the retardation film having excellent birefringence, in-plane phase difference, and transparency.

### RELATED DOCUMENT

### PATENT DOCUMENT

[Patent Document 1] Japanese Unexamined Patent Publication No. 2020-185742
[Patent Document 2] Pamphlet of International Publication No. WO2006/030797
[Patent Document 3] Japanese Unexamined Patent Publication No. 2017-58487

### SUMMARY OF THE INVENTION

### TECHNICAL PROBLEM

In optical component applications for which there is a demand for size and thickness reductions, there is a demand for cyclic olefin copolymers to have further reduced birefringence while maintaining good moldability.

According to studies conducted by the present inventors, it was clear that the inventions disclosed in Patent Documents 1 to 3 have room for improvement in the performance balance between moldability and low birefringence.

The present invention was created in view of the above circumstances and provides a cyclic olefin copolymer and a cyclic olefin copolymer composition able to realize a molded body having good moldability and low birefringence, as well as a molded body and an optical component having good moldability and low birefringence.

### SOLUTION TO PROBLEM

The present inventors carried out extensive studies to solve the problems described above. As a result, it was found that setting the ratio of the constituent units derived from the olefin monomers and the constituent units derived from the cyclic olefin monomers, which constitute the cyclic olefin copolymer, and the weight average molecular weight (Mw) to specific ranges makes it possible to improve the performance balance between moldability and low birefringence in a cyclic olefin copolymer, thereby completing the present invention.

According to the present invention, the cyclic olefin copolymer, the cyclic olefin copolymer composition, the molded body, and the optical component shown below are provided.

[1] A cyclic olefin copolymer including a constituent unit (A) that is derived from an olefin monomer represented by Formula (1), and a constituent unit (B) that is derived from at least one cyclic olefin monomer selected from the group consisting of a cyclic olefin monomer represented by Formula (2) and a cyclic olefin monomer represented by Formula (3), in which, when a total content of the constituent unit (A) and the constituent unit (B) in the cyclic olefin copolymer is set to 100% by mole, a content of the constituent unit (A) is 40% by mole or more and 70% by mole or less and a content of the constituent unit (B) is 30% by mole or more and 60% by mole or less, a weight average molecular weight (Mw) measured by gel permeation chromatography (GPC) is 50,000 or more and 500,000 or less, and a glass transition temperature (Tg) is 150°C or higher. 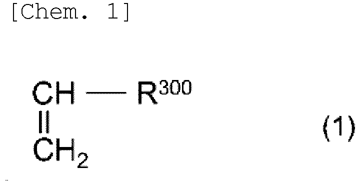
   (In Formula (1), R³⁰⁰ represents a hydrogen atom or a linear or branched hydrocarbon group having 1 or more and 28 or less carbon atoms.) 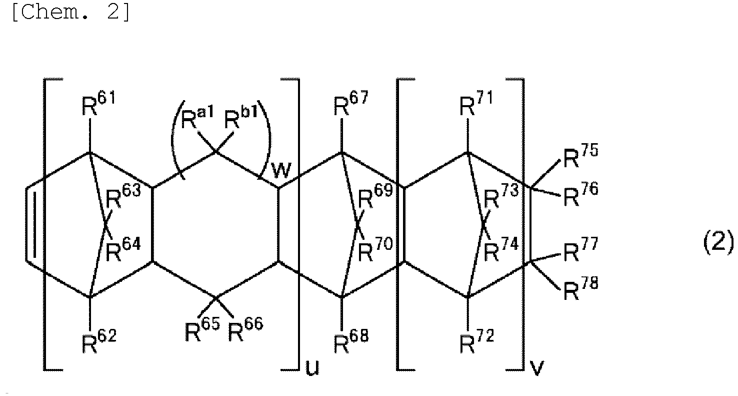
   (In Formula (2), u is 0 or 1, v is 0 or a positive integer, w is 0 or 1, R⁶¹ to R⁷⁸ and R^{a1} and R^{b1} are each independently selected from the group consisting of a hydrogen atom, a halogen atom and a hydrocarbon group, R⁷⁵ to R⁷⁸ may be bonded to each other to form a monocyclic ring or a polycyclic ring, the monocyclic ring or the polycyclic ring may have a double bond, and R⁷⁵ and R⁷⁶, or R⁷⁷ and R⁷⁸ may form an alkylidene group.) 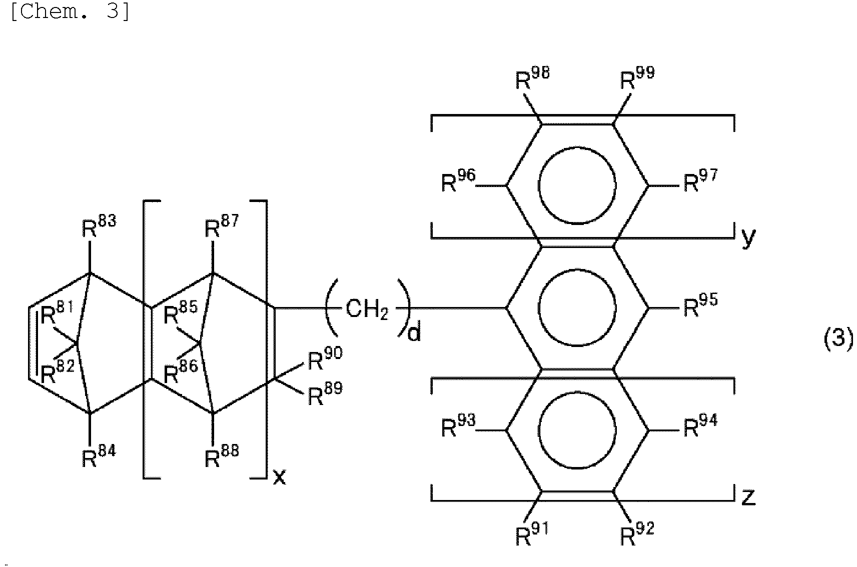
   (in Formula (3), x and d are 0 or an integer of 1 or more, y and z are 0, 1 or 2, R⁸¹ to R⁹⁹ are each independently selected from the group consisting of a hydrogen atom, a halogen atom and a hydrocarbon group, the carbon atom to which R⁸⁹ and R⁹⁰ are bonded, and the carbon atom to which R⁹³ is bonded or the carbon atom to which R⁹¹ is bonded may be bonded directly or through an alkylene group having 1 or more and 3 or less carbon atoms, and, when y=z=0, R⁹⁵ and R⁹², or R⁹⁵ and R⁹⁹ may be bonded to each other to form a monocyclic or polycyclic aromatic ring).
[2] The cyclic olefin copolymer according to [1], in which the weight average molecular weight (Mw) is 50,000 or more and 150,000 or less, and the glass transition temperature (Tg) is 150°C or higher and 190°C or lower.
[3] The cyclic olefin copolymer according to [1] or [2], in which the glass transition temperature (Tg) is 165°C or higher.
[4] The cyclic olefin copolymer according to any of [1] to [3], in which a molecular weight distribution (Mw/Mn) is 2.20 or more and 2.50 or less.
[5] The cyclic olefin copolymer according to any of [1] to [4], in which an intrinsic viscosity η [dl/g] (in decalin at 135°C) is 0.60 dl/g or less.
[6] The cyclic olefin copolymer according to any of [1] to [5], in which the cyclic olefin monomer constituting the constituent unit (B) includes at least one cyclic olefin monomer selected from the group consisting of tetracyclododecene, norbornene, and derivatives thereof.
[7] The cyclic olefin copolymer according to any of [1] to [6], in which the olefin monomer constituting the constituent unit (A) includes ethylene.
[8] The cyclic olefin copolymer according to any of [1] to [7], in which, when a press-molded body having a thickness of 0.1 mm formed of the cyclic olefin copolymer is produced and then the press-molded body is uniaxially stretched, a birefringence of the uniaxially stretched press-molded body is 10 nm or less.
[9] A cyclic olefin copolymer composition including the cyclic olefin copolymer according to any of [1] to [8].
[10] The cyclic olefin copolymer according to any of [1] to [8] or the cyclic olefin copolymer composition according to [9], which is usable for optical components.
[11] A molded body including the cyclic olefin copolymer according to any of [1] to [8] or the cyclic olefin copolymer composition according to [9] or [10].
[12] An optical component including the molded body according to [11] .
[13] The optical component according to [12], in which the optical component is a head-mounted display lens.
[14] Use of the optical component according to [12] for a head-mounted display lens.

### ADVANTAGEOUS EFFECTS OF INVENTION

According to the present invention, it is possible to provide a cyclic olefin copolymer and a cyclic olefin copolymer composition able to realize a molded body having good moldability and low birefringence, as well as a molded body and an optical component having good moldability and low birefringence.

### DESCRIPTION OF EMBODIMENTS

A description will be given below of the present invention, based on embodiments. In the present embodiment, unless otherwise specified, "A to B" indicating a numerical range represents A or more and B or less.

Furthermore, each monomer constituting the cyclic olefin copolymer of the present invention may be a monomer obtained from a fossil raw material, or may be a monomer obtained from an animal or plant raw material.

### [Cyclic Olefin Copolymer]

The cyclic olefin copolymer of the present invention includes a constituent unit (A) that is derived from an olefin monomer represented by Formula (1), and a constituent unit (B) that is derived from at least one cyclic olefin monomer selected from the group consisting of a cyclic olefin monomer represented by Formula (2) and a cyclic olefin monomer represented by Formula (3), in which, when a total content of the constituent unit (A) and the constituent unit (B) in the cyclic olefin copolymer is set to 100% by mole, a content of the constituent unit (A) is 40% by mole or more and 70% by mole or less and a content of the constituent unit (B) is 30% by mole or more and 60% by mole or less, a weight average molecular weight (Mw) measured by gel permeation chromatography (GPC) is 50,000 or more and 500,000 or less, and a glass transition temperature (Tg) is 150°C or higher.

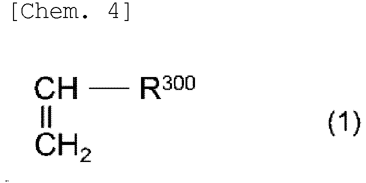

In Formula (1), R³⁰⁰ represents a hydrogen atom or a linear or branched hydrocarbon group having 1 or more and 28 or less carbon atoms.

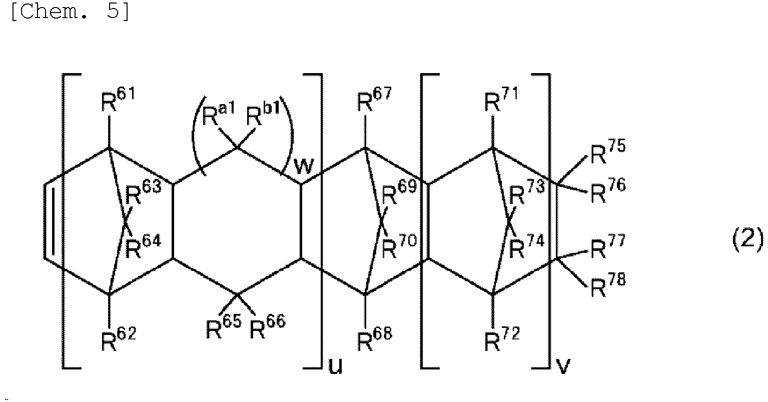

In Formula (2), u is 0 or 1, v is 0 or a positive integer, w is 0 or 1, R⁶¹ to R⁷⁸ and R^{a1} and R^{b1} are each independently selected from the group consisting of a hydrogen atom, a halogen atom and a hydrocarbon group, R⁷⁵ to R⁷⁸ may be bonded to each other to form a monocyclic ring or a polycyclic ring, the monocyclic ring or the polycyclic ring may have a double bond, and R⁷⁵ and R⁷⁶, or R⁷⁷ and R⁷⁸ may form an alkylidene group.

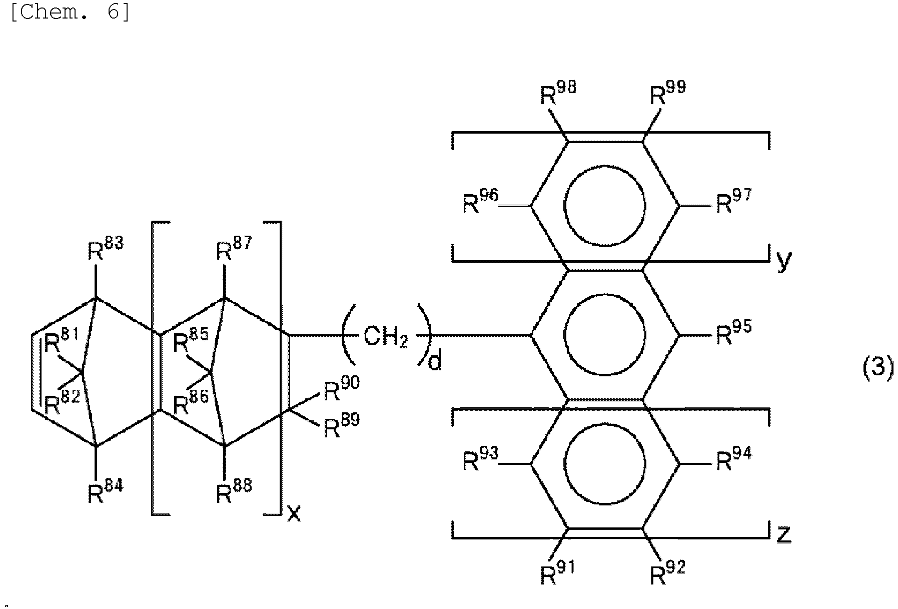

In Formula (3), x and d are 0 or an integer of 1 or more, y and z are 0, 1 or 2, R⁸¹ to R⁹⁹ are each independently selected from the group consisting of a hydrogen atom, a halogen atom and a hydrocarbon group, the carbon atom to which R⁸⁹ and R⁹⁰ are bonded, and the carbon atom to which R⁹³ is bonded or the carbon atom to which R⁹¹ is bonded may be bonded directly or through an alkylene group having 1 or more and 3 or less carbon atoms, and, when y=z=0, R⁹⁵ and R⁹², or R⁹⁵ and R⁹⁹ may be bonded to each other to form a monocyclic or polycyclic aromatic ring.

The cyclic olefin copolymer of the present invention is able to realize a molded body having good moldability and low birefringence.

The reason why such an effect is obtained is presumed to be as follows.

The birefringence of the cyclic olefin copolymer according to the present invention is thought to depend on the anisotropy of the polarizability derived from each primary structure. Therefore, it is thought that copolymerizing the constituent unit (A) with positive birefringence and the constituent unit (B) with negative birefringence in an appropriate ratio makes it possible to obtain a low birefringence cyclic olefin copolymer in which the positive and negative birefringence are offset within the polymer molecules and birefringence is not easily generated.

Meanwhile, when the content of the constituent unit (B) increases, there is a tendency for the glass transition temperature Tg of the cyclic olefin copolymer to increase and for the moldability to decrease. Therefore, setting the weight average molecular weight (Mw) of the cyclic olefin copolymer according to the present invention to an appropriate range makes it possible to suppress a decrease in moldability.

For the above reasons, it is thought that, according to the cyclic olefin copolymer according to the present invention, it is possible to obtain a molded body having good moldability and low birefringence.

An olefin monomer, which is one of the copolymerization raw materials for the cyclic olefin copolymer according to the present invention, is subjected to addition-polymerization to form the constituent unit (A), for which it is possible to exemplify an olefin monomer represented by Formula (1).

In Formula (1), R³⁰⁰ represents a hydrogen atom or a linear or branched hydrocarbon group having 1 or more and 28 or less carbon atoms.

Examples of the olefin monomer represented by Formula (1) include at least one selected from the group consisting of ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, and the like. Among the above, from the viewpoint of obtaining an optical component having superior heat resistance, mechanical characteristics and optical characteristics, at least one selected from the group consisting of ethylene and propylene is preferable and ethylene is more preferable.

From the viewpoint of improving the performance balance of moldability and low birefringence, when the total content of the constituent unit (A) and the constituent unit (B) in the cyclic olefin copolymer is set to 100% by mole, the content of the constituent unit (A) in the cyclic olefin copolymer according to the present invention is 40% by mole or more, preferably 45% by mole or more, more preferably 50% by mole or more, and even more preferably 54% by mole or more and, from the same viewpoint, 70% by mole or less, preferably 65% by mole or less, more preferably 62% by mole or less, even more preferably 60% by mole or less, and yet more preferably 58% by mole or less.

It is possible to measure the content of the constituent unit (A) derived from the olefin monomer represented by Formula (1) using ¹³C-NMR.

A cyclic olefin monomer, which is one of the copolymerization raw materials for the cyclic olefin copolymer according to the present invention, is subjected to addition-polymerization to form the constituent unit (B), for which it is possible to exemplify a cyclic olefin monomer represented by Formula (2) and a cyclic olefin monomer represented by Formula (3) .

In Formula (2), u is 0 or 1, preferably 0.
v is 0 or a positive integer, preferably an integer of 0 or more and 2 or less, more preferably 0 or 1, and even more preferably 1.
w is 0 or 1, preferably 1.
R⁶¹ to R⁷⁸ and R^{a1} and R^{b1} are each independently selected from the group consisting of a hydrogen atom, a halogen atom and a hydrocarbon group, preferably selected from the group consisting of a hydrogen atom and a hydrocarbon group, and more preferably a hydrogen atom. Examples of the hydrocarbon group include an alkyl group having 1 to 20 carbon atoms, a halogenated alkyl group having 1 to 20 carbon atoms, a cycloalkyl group having 3 to 15 carbon atoms, an aromatic hydrocarbon group having 6 to 20 carbon atoms, or the like, preferably an alkyl group having 1 or more and 4 or less carbon atoms, more preferably a methyl group or an ethyl group, and even more preferably a methyl group.
R⁷⁵ to R⁷⁸ may be bonded to each other to form a monocyclic ring or a polycyclic ring, the monocyclic ring or the polycyclic ring may have a double bond, and R⁷⁵ and R⁷⁶, or R⁷⁷ and R⁷⁸ may form an alkylidene group.

In Formula (3), x and d are 0 or an integer of 1 or more, preferably 0 or 1, and more preferably 1.
y and z are 0, 1 or 2, preferably 0 or 1, and more preferably 0.
R⁸¹ to R⁹⁹ are each independently selected from the group consisting of a hydrogen atom, a halogen atom and a hydrocarbon group, preferably selected from the group consisting of a hydrogen atom and a hydrocarbon group, and more preferably a hydrogen atom. Examples of the hydrocarbon group include an alkyl group having 1 to 20 carbon atoms, a halogenated alkyl group having 1 to 20 carbon atoms, a cycloalkyl group having 3 to 15 carbon atoms, an aromatic hydrocarbon group having 6 to 20 carbon atoms, or the like, preferably an alkyl group having 1 or more and 4 or less carbon atoms, more preferably a methyl group or an ethyl group, and even more preferably a methyl group.

The carbon atom to which R⁸⁹ and R⁹⁰ are bonded, and the carbon atom to which R⁹³ is bonded or the carbon atom to which R⁹¹ is bonded may be bonded directly or through an alkylene group having 1 or more and 3 or less carbon atoms, and, when y=z=0, R⁹⁵ and R⁹², or R⁹⁵ and R⁹⁹ may be bonded to each other to form a monocyclic or polycyclic aromatic ring.

Specific examples of the cyclic olefin monomer represented by Formula (2) or Formula (3) include the compounds disclosed in paragraphs 0037 to 0063 of Pamphlet of International Publication No. WO2006/118261.

Among the cyclic olefin monomers represented by Formula (2) or Formula (3), the cyclic olefin monomer represented by Formula (2) is preferable.

From the viewpoint of further improving the performance balance of moldability and low birefringence, the cyclic olefin monomer represented by Formula (2) is preferably at least one selected from the group consisting of tetracyclo [4.4.0.1^{2,5}.1^{7,10}]-3-dodecene (in the present specification, also referred to as "tetracyclododecene"), bicyclo[2.2.1]-2-heptene (in the present specification, also referred to as "norbornene") and derivatives thereof, more preferably at least one selected from the group consisting of tetracyclododecene and norbornene, and even more preferably tetracyclododecene.

From the viewpoint of improving the performance balance of moldability and low birefringence, when the total content of the constituent unit (A) and the constituent unit (B) in the cyclic olefin copolymer is set to 100% by mole, the content of the constituent unit (B) in the cyclic olefin copolymer according to the present invention is 30% by mole or more, preferably 35% by mole or more, more preferably 38% by mole or more, even more preferably 40% by mole or more, and still more preferably 42% by mole or more and, from the same viewpoint, 60% by mole or less, preferably 55% by mole or less, more preferably 50% by mole or less, and even more preferably 46% by mole or less.

It is possible to measure the content of the constituent unit (B) derived from the cyclic olefin monomer represented by Formula (2) or (3) using ¹³C-NMR.

Examples of the copolymer type of the cyclic olefin copolymer according to the present invention include random copolymers, block copolymers, and the like. From the viewpoint of further improving the performance balance of moldability, low birefringence, transparency, refractive index, and the like, the copolymer type of the cyclic olefin copolymer according to the present invention is preferably a random copolymer.

From the viewpoint of further improving the performance balance of moldability, low birefringence, transparency, refractive index, and the like, the cyclic olefin copolymer according to the present invention is preferably at least one selected from the group consisting of a random copolymer of ethylene and tetracyclo[4.4.0.1^{2,5}.1^{7,10}]-3-dodecene and a random copolymer of ethylene and bicyclo[2.2.1]-2-heptene, and more preferably a random copolymer of ethylene and tetracyclo[4.4.0.1^{2,5}.1^{7,10}]-3-dodecene.

From the viewpoint of further improving the performance balance of moldability and low birefringence, when the total content of the constituent units in the cyclic olefin copolymer is set to 100% by mole, the total content of the constituent unit (A) and the constituent unit (B) in the cyclic olefin copolymer according to the present invention is preferably 80% by mole or more, more preferably 90% by mole or more, even more preferably 95% by mole or more, still more preferably 97% by mole or more, yet more preferably 98% by mole or more, and yet still more preferably 99% by mole or more and, from the same viewpoint, preferably 100% by mole or less.

The cyclic olefin copolymer according to the present invention may be used as one type alone or in a combination of two or more types.

It is possible to produce the cyclic olefin copolymer according to the present invention by selecting appropriate conditions in accordance with the methods in, for example, Japanese Unexamined Patent Publication No. S60-168708, Japanese Unexamined Patent Publication No. S61-120816, Japanese Unexamined Patent Publication No. S61-115912, Japanese Unexamined Patent Publication No. S61-115916, Japanese Unexamined Patent Publication No. S61-271308, Japanese Unexamined Patent Publication No. S61-272216, Japanese Unexamined Patent Publication No. S62-252406, Japanese Unexamined Patent Publication No. S62-252407, Japanese Unexamined Patent Publication No. S2018-145349, Pamphlet of International Publication No. WO2015/122415, Japanese Unexamined Patent Publication No. S2007-063409, Japanese Unexamined Patent Publication No. S2-173112, and the like.

Since the content of the constituent unit (A) and the content of the constituent unit (B) are easily adjusted in a more preferable manner, the cyclic olefin copolymer according to the present invention is preferably produced using a predetermined catalyst.

Examples of the catalyst include half metallocene-based titanium compounds, half metallocene-based zirconium compounds, half metallocene-based hafnium compounds, metallocene-based titanium compounds, metallocene-based zirconium compounds, metallocene-based hafnium compounds, and the like.

Among the above, one or two or more selected from the group consisting of half metallocene-based titanium compounds having at least one of a cyclopentadienyl group and a pyrazolate group, half metallocene-based zirconium compounds having at least one of a cyclopentadienyl group and a pyrazolate group, half metallocene-based hafnium compounds having at least one of a cyclopentadienyl group and a pyrazolate group, metallocene-based titanium compounds having fluorene, metallocene-based zirconium compounds having fluorene, and metallocene-based hafnium compounds having fluorene are preferable.

It is possible to produce these catalysts by selecting appropriate conditions in accordance with the methods in, for example, Japanese Unexamined Patent Publication No. 2018-150273, Japanese Unexamined Patent Publication No. 2019-172954, and the like.

From the viewpoint of improving the performance balance of moldability, low birefringence and heat resistance, the glass transition temperature (Tg) of the cyclic olefin copolymer according to the present invention is 150°C or higher, preferably 155°C or higher, more preferably 160°C or higher, even more preferably 165°C or higher, still more preferably 170°C or higher, yet more preferably 175°C or higher, yet still more preferably 180°C or higher and, from the same viewpoint, preferably 250°C or lower, more preferably 230°C or lower, even more preferably 200°C or lower, and still more preferably 190°C or lower.

It is possible to measure the glass transition temperature (Tg) of the cyclic olefin copolymer according to the present invention using a differential scanning calorimeter (DSC). As specific measurement conditions, for example, using a DSC-7020 manufactured by Hitachi High-Tech Science Co., Ltd., the temperature was increased from room temperature to 250°C at a temperature-increasing rate of 10°C/min in a nitrogen atmosphere, then held for 5 minutes, then decreased to -20°C at a temperature-decreasing rate of 10°C/min and then held for 5 minutes. It is possible to determine the glass transition temperature (Tg) of the cyclic olefin copolymer from the endothermic curve when the temperature is increased to 300°C at a temperature-increasing rate of 10°C/min.

From the viewpoint of further improving the performance balance of moldability and low birefringence, the intrinsic viscosity η [dl/g] (in decalin at 135°C) of the cyclic olefin copolymer according to the present invention is preferably 0.20 dl/g or more, more preferably 0.23 dl/g or more, even more preferably 0.30 dl/g or more, still more preferably 0.35 dl/g or more, and yet more preferably 0.40 dl/g and, from the same viewpoint, preferably 0.75 dl/g or less, more preferably 0.70 dl/g or less, even more preferably 0.60 dl/g or less, still more preferably 0.55 dl/g or less, and yet more preferably 0.50 dl/g or less.

It is possible to measure the intrinsic viscosity η [dl/g] of the cyclic olefin copolymer according to the present invention in accordance with ASTM J1601, and specifically, by the method described in the Examples.

From the viewpoint of further improving the performance balance of moldability and low birefringence, the weight average molecular weight (Mw) measured by gel permeation chromatography (GPC) of the cyclic olefin copolymer according to the present invention is 50,000 or more, preferably 70,000 or more, more preferably 80,000 or more, even more preferably 90,000 or more, still more preferably 100,000 or more, and yet more preferably 110,000 or more and, from the same viewpoint, 500,000 or less, preferably 300,000 or less, more preferably 200,000 or less, even more preferably 150,000 or less, still more preferably 130,000 or less, and yet more preferably 120,000 or less.

In particular, when the Mw of the cyclic olefin copolymer is 150,000 or less, fish eyes are not easily formed during film molding and fluidity becomes better during injection molding, such that it is possible to suitably use the cyclic olefin copolymer for thin injection molding. Further, birefringence is further suppressed, which is more suitable for expansion into optical applications and thus more preferable.

Specifically, it is possible to measure the weight average molecular weight (Mw) of the cyclic olefin copolymer according to the present invention by the method described in the Examples.

From the viewpoint of further improving the performance balance between moldability and low birefringence, the molecular weight distribution (Mw/Mn) of the cyclic olefin copolymer according to the present invention is preferably 2.20 or more, more preferably 2.25 or more, even more preferably 2.30 or more, and still more preferably 2.35 or more and, from the same viewpoint, preferably 2.50 or less.

Specifically, it is possible to measure the number average molecular weight (Mn) of the cyclic olefin copolymer according to the present invention by the method described in the Examples.

In the cyclic olefin copolymer according to the present invention, from the viewpoint of adjusting the birefringence of the obtained molded body to a more suitable range, when a press-molded body having a thickness of 0.1 mm formed of the cyclic olefin copolymer according to the present invention is produced and uniaxially stretched, the birefringence of the press-molded body is preferably 10 nm or less, more preferably 8 nm or less, even more preferably 5 nm or less, still more preferably 3.5 nm or less, yet more preferably 3 nm or less, yet still more preferably 1 nm or less, and yet still further more preferably 0.5 nm or less.

In the present specification, for example, the birefringence of an injection molded body is the average value (nm) of the phase difference for 20 to 35 mm from the gate direction, which is measured using a KOBRA CCD manufactured by Oji Scientific Instruments at a measurement wavelength of 650 nm.

In addition, it is possible to obtain a press-molded body having a thickness of 0.1 mm formed of a cyclic olefin copolymer by, for example, interposing the cyclic olefin copolymer between super heat-resistant polyimide films and vacuum press-molding the cyclic olefin copolymer under conditions of 260°C and 10 MPa for 3 minutes using a 0.1 mm spacer. In addition, for the conditions for uniaxial stretching, it is possible to adopt, for example, the conditions of a stretching temperature of Tg+5°C of the cyclic olefin copolymer, a stretching speed of 3%/min and 1.5 times stretching in the uniaxial direction.

### [Cyclic Olefin Copolymer Composition]

The cyclic olefin copolymer composition according to the present invention includes the above-described cyclic olefin copolymer according to the present invention and, as necessary, includes other components than the cyclic olefin copolymer according to the present invention. In the present specification, a case where the cyclic olefin copolymer composition according to the present invention includes only a cyclic olefin copolymer is also referred to as a cyclic olefin copolymer composition.

In addition, from the viewpoint of further improving the performance balance between moldability and low birefringence, when the entire cyclic olefin copolymer composition is 100% by mass, the content of the cyclic olefin copolymer according to the present invention in the cyclic olefin copolymer composition according to the present invention is preferably 50% by mass or more, more preferably 70% by mass or more, even more preferably 80% by mass or more, still more preferably 90% by mass or more, yet more preferably 95% by mass or more, and yet still more preferably 98% by mass or more.

Examples of other components include resins other than the cyclic olefin copolymer according to the present invention, hydrophilic agents, light stabilizers, heat-resistant stabilizers, antioxidants, metal deactivators, hydrochloric acid absorbing agents, antistatic agents, flame retardants, slip agents, anti-blocking agents, anti-fogging agents, lubricants, natural oils, synthetic oils, waxes, organic or inorganic fillers, secondary antioxidants, mold release agents, and the like. It is possible to blend other components in ranges in which the purpose of the present invention is not impaired and the blending ratios thereof are appropriate amounts.

It is possible to obtain the cyclic olefin copolymer composition according to the present invention by methods such as a method for melt-kneading the cyclic olefin copolymer according to the present invention and other components using known kneading devices such as an extruder and a Banbury mixer, and the like; a method for dissolving the cyclic olefin copolymer according to the present invention and other components in a common solvent and then evaporating the solvent; and a method for carrying out precipitation by adding a solution of the cyclic olefin copolymer according to the present invention and other components to a poor solvent.

### [Molded Body and Optical Component]

The molded body according to the present invention is a molded body including the cyclic olefin copolymer according to the present invention or the cyclic olefin copolymer composition according to the present invention.

Since the molded body according to the present invention includes the cyclic olefin copolymer according to the present invention, the balance of heat resistance, optical performance (transparency, haze, and the like), chemical resistance, low moisture absorption, and the like is good and the performance balance between moldability and low birefringence is improved.

Since the molded body according to the present invention includes the cyclic olefin copolymer according to the present invention, the optical properties such as low birefringence are excellent. For this reason, the molded body according to the present invention is able to be suitably used as an optical component in an optical system that requires highly accurate identification of images.

Optical components are parts used in optical system devices or the like and specific examples thereof include various sensor lenses, pickup lenses, projector lenses, prisms, fθ lenses, imaging lenses, camera lenses, light guide plates, head-mounted display lenses, and the like and, from the viewpoint of the effects of the present invention, the molded body according to the present invention is able to be particularly suitably used in fθ lenses, imaging lenses, sensor lenses, prisms, light guide plates, head-mounted display lenses, and the like.

In addition, from the viewpoint of further improving the performance balance between moldability and low birefringence, when the entire molded body is 100% by mass, the content of the cyclic olefin copolymer according to the present invention in the molded body according to the present invention is preferably 50% by mass or more, more preferably 70% by mass or more, even more preferably 80% by mass or more, still more preferably 90% by mass or more, yet more preferably 95% by mass or more, and yet still more preferably 98% by mass or more.

The method for molding the cyclic olefin copolymer according to the present invention or the cyclic olefin copolymer composition according to the present invention to obtain a molded body is not particularly limited and it is possible to use known methods. Depending on the application and shape, for example, extrusion molding, injection molding, compression molding, inflation molding, blow molding, extrusion blow molding, injection blow molding, press molding, vacuum molding, powder slush molding, calendar molding, foam molding, and the like are applicable. Among the above, injection molding methods and extrusion molding are preferable from the viewpoint of moldability and productivity and injection molding methods are more preferable. In addition, the molding conditions are appropriately selected depending on the purpose of use or molding method, but, for example, the resin temperature in the injection molding is appropriately selected within the range of 150°C to 400°C, preferably 200°C to 350°C, and more preferably 230°C to 330°C.

Although the embodiments of the present invention were described above, these are merely examples of the present invention and it is also possible to adopt various configurations other than described above.

In addition, the present invention is not limited to the above-described embodiments and any modifications, improvements, or the like in a range in which it is possible to achieve the purpose of the present invention are included in the present invention.

### Examples

A detailed description will be given below of the present embodiment with reference to Examples and the like. The present embodiment is not limited to the description of these Examples.

First, a description will be given of the measurement methods and evaluation methods performed in the Examples and Comparative Examples.

### [Method for Measuring Content of each Constituent Unit Constituting Cyclic Olefin Copolymer]

The content of ethylene and tetracyclo [4.4.0.1^{2,5}.1^{7,10}]-3-dodecene was measured under the following conditions using an AVANCE III cryo-500 model nuclear magnetic resonance apparatus manufactured by Bruker Biospin.
Solvent: Deutetrachloroethane
Sample concentration: 10w/v%
Pulse repetition time: 12 seconds
Cumulative number: 256 times
Measurement temperature: 120°C

The contents of ethylene and tetracyclododecene were each determined using ¹³C-NMR spectra measured under the conditions described above.

### [Intrinsic Viscosity [η]]

A sample was prepared by dissolving 0.25 to 0.30 g of a cyclic olefin copolymer in 25 ml of decalin using a transfer viscometer (VNR053U model, manufactured by Rigo). The specific viscosity of the cyclic olefin copolymer was measured at 135°C in accordance with ASTM J1601 and the ratio of the specific viscosity and the concentration was extrapolated to a concentration of 0 to determine the intrinsic viscosity [η] of the cyclic olefin copolymer.

### [Glass Transition Temperature (Tg)]

The glass transition temperature (Tg) of the cyclic olefin copolymer was measured in a nitrogen atmosphere using DSC-7020 manufactured by Hitachi High-Tech Science. The temperature of the cyclic olefin copolymer was increased from room temperature to 250°C at a temperature-increasing rate of 10°C/min and then held for 5 minutes. Next, the temperature was decreased to - 20°C at a temperature-decreasing rate of 10°C/min and then held for 5 minutes. Then, the glass transition temperature (Tg) of the cyclic olefin copolymer was determined from the endothermic curve when the temperature was increased to 300°C at a temperature-increasing rate of 10°C/min.

### [Weight Average Molecular Weight (Mw), Molecular Weight Distribution (Mw/Mn)]

The weight average molecular weight (Mw) and number average molecular weight (Mn) of the cyclic olefin copolymer were determined by gel permeation chromatography (GPC). The calculation was carried out from the molecular weight distribution curve obtained by an "Alliance GPC 2000" gel permeation chromatograph (high temperature size exclusion chromatograph) manufactured by Waters Corp., and the operating conditions were as follows.

### <Equipment and Conditions Used>

Measurement device: Gel permeation chromatography Alliance GPC2000 model (Waters Corp.)
Analysis software: Chromatography data system Empower (trademark, Waters Corp.)
Column: TSKgel GMH6-HT×2 + TSKgel GMH6-HT×2 (inner diameter 7.5 mm × length 30 cm, Tosoh Corp.)
Mobile phase: o-dichlorobenzene [=ODCB] (special grade reagent, manufactured by Wako Pure Chemical Industries)
Detector: Differential refractometer (built-in device)
Column temperature: 140°C
Flow rate: 1.0 mL/min
Injection volume: 400 µL
Sampling time interval: 1 second
Sample concentration: 0.15% (w/v%)
Molecular weight calibration: Monodisperse polystyrene (Tosoh Corp.)/molecular weight 495 to molecular weight 20.6 million

### [Moldability]

The cyclic olefin copolymers obtained in the Examples and Comparative Examples were interposed between super heat-resistant polyimide films (trade name: Upilex, manufactured by Ube Industries, Ltd.) and vacuum press-molded under conditions of 260°C and 10 MPa for 3 minutes using a 0.1 mm spacer. Next, the obtained film was stretched 1.5 times in the uniaxial direction using AG-X-P (Shimadzu Corp.) at a stretching temperature of Tg+5°C of the cyclic olefin copolymer and a stretching speed of 3%/min. The stretched film was removed and immersed in ice water for 3 minutes to obtain a film for birefringence measurement.

Next, the obtained film for birefringence measurement was observed and the moldability of the cyclic olefin copolymer was evaluated based on the following criteria.
A: No cracks are visually observed and the film shape is maintained in 80% or more of the film.
B: Cracks are visually observed and the film shape is maintained in 70% or more of the film.
C: Cracks are visually observed and the film shape is not maintained in more than 30% and less than 70% of the film.
D: Cracks are visually observed and the film shape is not maintained in 70% or more of the film.

### [Birefringence]

For an 80 mm × 15 mm × thickness 0.08 mm film for birefringence measurement obtained as described above, using a KOBRA CCD manufactured by Oji Scientific Instruments, the average value (nm) of the phase difference from 20 to 35 mm from the gate direction at a measurement wavelength of 650 nm was determined as the birefringence.

### Example 1

900 mL of a mixed solution of cyclohexane/hexane mixed in a 9/1 ratio and 16.2 g of tetracyclo[4.4.0.1^{2,5}.1^{7,10}]-3-dodecene (also simply referred to below as "tetracyclododecene", Mw: 160.2 (g/mol)) were charged into a glass reactor having an internal volume of 2.0 L, which was sufficiently replaced with nitrogen, and the liquid phase and gas phase were saturated with ethylene at 150 liters/hr and hydrogen at 0.24 liters/hr. 0.9 mmol of MMAO (modified methylaluminoxane) was added thereto. Subsequently, 0.003 mmol of 3,5-bismethylethyl-1-pyrazolate-t-butylcyclopentadienyl titanium dichloride (referred to below as titanium compound (1), synthesized with reference to Japanese Unexamined Patent Publication No. 2018-150273) was added thereto, 0.012 mmol of triphenylcarbenium tetrakis(pentafluorophenyl)borate (referred to below as borate compound (1), synthesized with reference to Japanese Unexamined Patent Publication No. 2018-150273) was added thereto, and the polymerization reaction was started.

After continuously supplying ethylene at 150 liters/hr and hydrogen at 0.24 liters/hr, polymerization was performed at 50°C for 10 minutes under normal pressure and then the polymerization was stopped by adding a small amount of isobutanol. After the polymerization was completed, a reactant was added to 4.5 liters of a mixed solvent of acetone/methanol (3/1) including a small amount of hydrochloric acid to precipitate the polymer. After washing with the same solvent, drying was carried out under reduced pressure at 130°C for 10 hours to obtain 2.19 g of an ethylene/tetracyclododecene copolymer. The polymerization activity was 4.38 kg/mmol·hr, the intrinsic viscosity [η] of the obtained ethylene/tetracyclododecene copolymer (constituent unit (A): ethylene 56% by mole, constituent unit (B): tetracyclododecene 44% by mole), was 0.47 (dl/g), Mw was 119,000 (g/mol), and Mw/Mn was 2.48. The glass transition temperature measured by a differential scanning calorimeter (DSC) was 186°C and the moldability of the film for birefringence measurement was good (film moldability: A). The birefringence was 0.2 nm. The results are shown in Table 1.

### Example 2

300 mL of a mixed solution of cyclohexane/hexane (9/1) and 3.6 g of tetracyclododecene were charged into a glass reactor having an internal volume of 500 mL, which was sufficiently replaced with nitrogen, and the liquid phase and gas phase were saturated with ethylene at 90 liters/hr and hydrogen at 0.24 liters/hr. 0.3 mmol of MMAO was added thereto. 0.001 mmol of titanium compound (1) and 0.004 mmol of borate compound (1) were added to start polymerization.

90 liters/hr of ethylene and 0.24 liters/hr of hydrogen were continuously supplied thereto and polymerization was performed at 50°C for 10 minutes under normal pressure. Thereafter, the polymerization was stopped by adding a small amount of isobutanol. After the polymerization was completed, the reactant was added to 1.2 liters of a mixed solvent of acetone/methanol (3/1) including a small amount of hydrochloric acid to precipitate the polymer. After washing with the same solvent, drying was carried out under reduced pressure at 130°C for 10 hours to obtain 1.33 g of an ethylene/tetracyclododecene copolymer. The polymerization activity was 7.97 kg/mmol·hr, the [η] of the obtained ethylene/tetracyclododecene copolymer (constituent unit (A): ethylene 59% by mole, constituent unit (B): tetracyclododecene 41% by mole) was 0.46 (dl/g), Mw was 104,000 (g/mol), and Mw/Mn was 2.37. The glass transition point temperature determined by DSC measurement was 168°C and the moldability of the film for birefringence measurement was good (film moldability: A). The birefringence was 3.1 nm. The results are shown in Table 1.

### Example 3

300 mL of a mixed solution in which cyclohexane/hexane were mixed in a ratio of 9/1 and 2.7 g of tetracyclododecene were charged into a glass reactor having an internal volume of 500 mL, which was sufficiently replaced with nitrogen, and the liquid phase and gas phase were saturated with ethylene at 90 liters/hr and hydrogen at 0.24 liters/hr. 0.3 mmol of MMAO (modified methylaluminoxane) was added thereto. Subsequently, 0.001 mmol of titanium compound (1) and 0.004 mmol of borate compound were added to start the polymerization reaction.

90 liters/hr of ethylene and 0.24 liters/hr of hydrogen were continuously supplied thereto, polymerization was performed at 50°C for 10 minutes under normal pressure, and then the polymerization was stopped by adding a small amount of isobutanol. After the polymerization was completed, a reactant was added to 1.5 liters of a mixed solvent of acetone/methanol (3/1) including a small amount of hydrochloric acid to precipitate the polymer. After washing with the same solvent, drying was carried out under reduced pressure at 130°C for 10 hours to obtain 1.8 g of an ethylene/tetracyclododecene copolymer. The polymerization activity was 1.8 kg/mmol·hr, the intrinsic viscosity [η] of the obtained ethylene/tetracyclododecene copolymer (constituent unit (A): ethylene 63% by mole, constituent unit (B): tetracyclododecene 37% by mole) was 0.53 (dl/g), Mw was 114,000 (g/mol), and Mw/Mn was 2.43. The glass transition temperature determined by DSC measurement was 150°C and the moldability of the film for birefringence measurement was good (film moldability: A). The birefringence was 7.7 nm. The results are shown in Table 1.

### Comparative Example 1

300 mL of a mixed solution of cyclohexane/hexane (9/1) and 32.4 g of tetracyclododecene were charged into a glass reactor having an internal volume of 500 mL, which was sufficiently replaced with nitrogen, and the liquid phase and gas phase were saturated with ethylene at 90 liters/hr and hydrogen at 0.24 liters/hr. 0.3 mmol of MMAO was added thereto. 0.00012 mmol of 3,5-bis(t-butyl)-1-pyrazolate-t-butylcyclopentadienyl titanium dichloride (referred to below as titanium compound (2)) was added thereto and 0.004 mmol of borate compound (1) was added to start polymerization.

90 liters/hr of ethylene and 0.24 liters/hr of hydrogen were continuously supplied thereto and polymerization was performed at 50°C for 10 minutes under normal pressure. Thereafter, the polymerization was stopped by adding a small amount of isobutanol. After the polymerization was completed, the reactant was added to 1.2 liters of a mixed solvent of acetone/methanol (3/1) including a small amount of hydrochloric acid to precipitate the polymer. After washing with the same solvent, drying was carried out under reduced pressure at 130°C for 10 hours to obtain 1.54 g of an ethylene/tetracyclododecene copolymer. The polymerization activity was 79.36 kg/mmol·hr, the [η] of the obtained ethylene/tetracyclododecene copolymer (constituent unit (A): ethylene 56% by mole, constituent unit (B): tetracyclododecene 44% by mole) was 0.17 (dl/g), Mw was 26,100 (g/mol), and Mw/Mn was 2.10. The glass transition point temperature determined by DSC measurement was 182°C and the moldability of the film for birefringence measurement was poor (film moldability: D). It was not possible to measure birefringence. The results are shown in Table 1.

### Comparative Example 2

300 mL of a mixed solution of cyclohexane/hexane (9/1) and 8.4 g of tetracyclododecene were charged into a glass reactor having an internal volume of 500 mL, which was sufficiently replaced with nitrogen, and the liquid phase and gas phase were saturated with ethylene at 51 liters/hr. 0.3 mmol of MMAO was added thereto. 0.000125 mmol of titanium compound (2) and 0.004 mmol of borate compound (1) were added to start polymerization.

51 liters/hr of ethylene was continuously supplied thereto and polymerization was performed at 50°C for 10 minutes under normal pressure. Thereafter, the polymerization was stopped by adding a small amount of isobutanol. After the polymerization was completed, the reactant was added to 1.2 liters of a mixed solvent of acetone/methanol (3/1) including a small amount of hydrochloric acid to precipitate the polymer. After washing with the same solvent, drying was carried out under reduced pressure at 130°C for 10 hours to obtain 0.84 g of an ethylene/tetracyclododecene copolymer. The polymerization activity was 40.37 kg/mmol·hr, the [η] of the obtained ethylene/tetracyclododecene copolymer (constituent unit (A): ethylene 64% by mole, constituent unit (B): tetracyclododecene 36% by mole) was 3.15 (dl/g), Mw was 1,290,000 (g/mol), and Mw/Mn was 2.54. The glass transition point temperature determined by DSC measurement was 156°C and the moldability of the film for birefringence measurement was normal (film moldability: B). The birefringence was 18.3 nm. The results are shown in Table 1.

### Comparative Example 3

300 mL of a mixed solution of cyclohexane/hexane (9/1) and 5.3 g of tetracyclododecene were charged into a glass reactor having an internal volume of 500 mL, which was sufficiently replaced with nitrogen, and the liquid phase and gas phase were saturated with ethylene at 51 liters/hr. 0.3 mmol of MMAO was added thereto. 0.000125 mmol of titanium compound (2) and 0.004 mmol of borate compound (1) were added to start polymerization.

51 liters/hr of ethylene was continuously supplied thereto and polymerization was performed at 50°C for 10 minutes under normal pressure. Thereafter, the polymerization was stopped by adding a small amount of isobutanol. After the polymerization was completed, the reactant was added to 1.2 liters of a mixed solvent of acetone/methanol (3/1) including a small amount of hydrochloric acid to precipitate the polymer. After washing with the same solvent, drying was carried out under reduced pressure at 130°C for 10 hours to obtain 0.68 g of an ethylene/tetracyclododecene copolymer. The polymerization activity was 32.98 kg/mmol·hr, the [η] of the obtained ethylene/tetracyclododecene copolymer (constituent unit (A): ethylene 67% by mole, constituent unit (B): tetracyclododecene 33% by mole) was 4.80 (dl/g), Mw was 3,520,000 (g/mol), and Mw/Mn was 2.77. The glass transition point temperature determined by DSC measurement was 138°C and the moldability of the film for birefringence measurement was normal (film moldability: B). The birefringence was 33.0 nm. The results are shown in Table 1.

**[Table 1]**

| | Content of constituent unit (A) (% by mole) | Content of constituent unit (B) (% by mole) | [*η*] (dl/g) | Tg (°C) | Mw | Mn | Mw/Mn | Moldability | Birefringence (nm) |
|---|---|---|---|---|---|---|---|---|---|
| Example 1 | 56 | 44 | 0.47 | 186 | 119,000 | 48,000 | 2.48 | A | 0.2 |
| Example 2 | 59 | 41 | 0.46 | 168 | 104,000 | 43,900 | 2.37 | A | 3.1 |
| Example 3 | 63 | 37 | 0.53 | 150 | 114,000 | 47,000 | 2.43 | A | 7.7 |
| Comparative Example 1 | 56 | 44 | 0.17 | 182 | 26,100 | 12,400 | 2.10 | D | Not measurable |
| Comparative Example 2 | 64 | 36 | 3.15 | 156 | 1,290,000 | 508,000 | 2.54 | B | 18.3 |
| Comparative Example 3 | 67 | 33 | 4.80 | 138 | 3,520,000 | 1,270,000 | 2.77 | B | 33.0 |

This application claims priority based on Japanese Patent Application No. 2022-037968 filed on March 11, 2022, and the entire disclosure thereof is incorporated herein.

## Claims

1. A cyclic olefin copolymer comprising:
a constituent unit (A) that is derived from an olefin monomer represented by Formula (1); and
a constituent unit (B) that is derived from at least one cyclic olefin monomer selected from the group consisting of a cyclic olefin monomer represented by Formula (2) and a cyclic olefin monomer represented by Formula (3),
wherein, when a total content of the constituent unit (A) and the constituent unit (B) in the cyclic olefin copolymer is set to 100% by mole, a content of the constituent unit (A) is 40% by mole or more and 70% by mole or less and a content of the constituent unit (B) is 30% by mole or more and 60% by mole or less,
a weight average molecular weight (Mw) measured by gel permeation chromatography (GPC) is 50,000 or more and 500,000 or less, and
a glass transition temperature (Tg) is 150°C or higher, 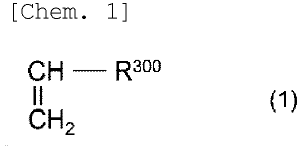
(in Formula (1), R³⁰⁰ represents a hydrogen atom or a linear or branched hydrocarbon group having 1 or more and 28 or less carbon atoms,) 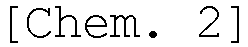 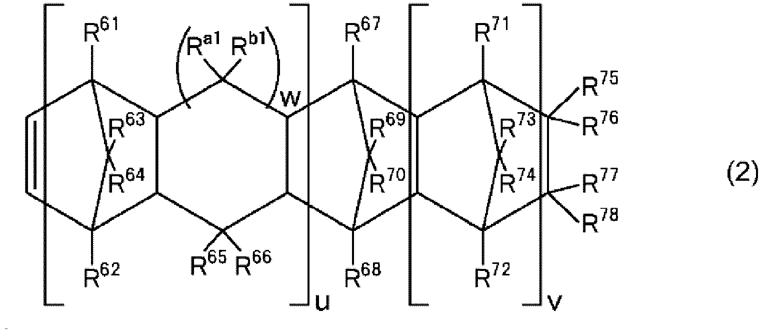
(in Formula (2), u is 0 or 1, v is 0 or a positive integer, w is 0 or 1, R⁶¹ to R⁷⁸ and R^{a1} and R^{b1} are each independently selected from the group consisting of a hydrogen atom, a halogen atom and a hydrocarbon group, R⁷⁵ to R⁷⁸ may be bonded to each other to form a monocyclic ring or a polycyclic ring, the monocyclic ring or the polycyclic ring may have a double bond, and R⁷⁵ and R⁷⁶, or R⁷⁷ and R⁷⁸ may form an alkylidene group,) 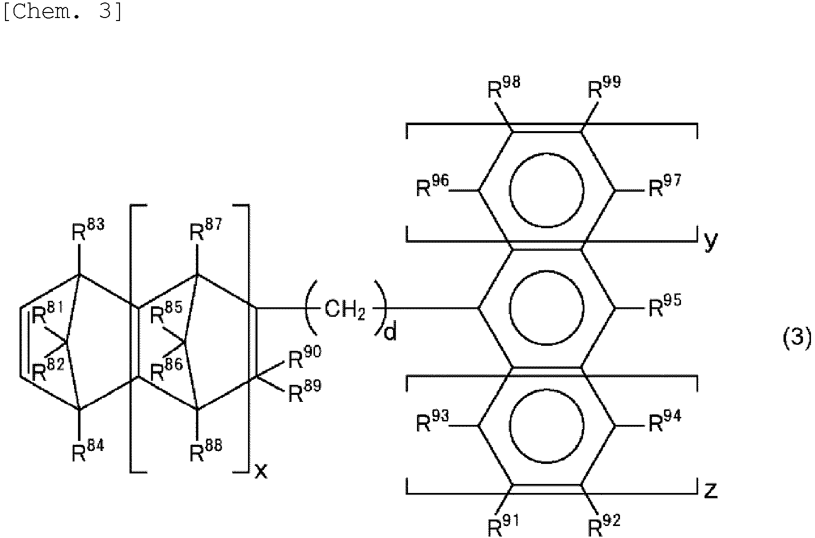
(in Formula (3), x and d are 0 or an integer of 1 or more, y and z are 0, 1 or 2, R⁸¹ to R⁹⁹ are each independently selected from the group consisting of a hydrogen atom, a halogen atom and a hydrocarbon group, the carbon atom to which R⁸⁹ and R⁹⁰ are bonded, and the carbon atom to which R⁹³ is bonded or the carbon atom to which R⁹¹ is bonded may be bonded directly or through an alkylene group having 1 or more and 3 or less carbon atoms, and, when y=z=0, R⁹⁵ and R⁹², or R⁹⁵ and R⁹⁹ may be bonded to each other to form a monocyclic or polycyclic aromatic ring).

2. The cyclic olefin copolymer according to Claim 1,
wherein the weight average molecular weight (Mw) is 50,000 or more and 150,000 or less, and
the glass transition temperature (Tg) is 150°C or higher and 190°C or lower.

3. The cyclic olefin copolymer according to Claim 1 or 2, wherein the glass transition temperature (Tg) is 165°C or higher.

4. The cyclic olefin copolymer according to any one of Claims 1 to 3,
wherein a molecular weight distribution (Mw/Mn) is 2.20 or more and 2.50 or less.

5. The cyclic olefin copolymer according to any one of Claims 1 to 4,
wherein an intrinsic viscosity η [dl/g] (in decalin at 135°C) is 0.60 dl/g or less.

6. The cyclic olefin copolymer according to any one of Claims 1 to 5,
wherein the cyclic olefin monomer constituting the constituent unit (B) includes at least one cyclic olefin monomer selected from the group consisting of tetracyclododecene, norbornene, and derivatives thereof.

7. The cyclic olefin copolymer according to any one of Claims 1 to 6,
wherein the olefin monomer constituting the constituent unit (A) includes ethylene.

8. The cyclic olefin copolymer according to any one of Claims 1 to 7,
wherein, when a press-molded body having a thickness of 0.1 mm formed of the cyclic olefin copolymer is produced and then the press-molded body is uniaxially stretched, a birefringence of the uniaxially stretched press-molded body is 10 nm or less.

9. A cyclic olefin copolymer composition comprising:
the cyclic olefin copolymer according to any one of Claims 1 to 8.

10. The cyclic olefin copolymer according to any one of Claims 1 to 8 or the cyclic olefin copolymer composition according to Claim 9, which is usable for optical components.

11. A molded body comprising:
the cyclic olefin copolymer according to any one of Claims 1 to 8 or the cyclic olefin copolymer composition according to Claim 9 or 10.

12. An optical component comprising:
the molded body according to Claim 11.

13. The optical component according to Claim 12,
wherein the optical component is a head-mounted display lens.

14. Use of the optical component according to Claim 12 for a head-mounted display lens.
